# EUROPEAN PATENT APPLICATION

(11) **EP 0 608 934 A2**
(43) Date of publication of application: **03.08.1994**
(21) Application number: 94200112.4
(22) Date of filing: 18.01.1994
(51) Int. Cl.: H04N 5/44

(54) **Television signal reception**

(30) Priority: 26.01.1993 EP 93200213
(71) Applicant: Philips Electronics N.V., 5621 BA Eindhoven (NL)
(72) Inventor: van de Waterlaat, Adrianus Cornelis Jacobus G., NL-5656 AA Eindhoven (NL); Tichelaar, Johannes Ijzebrand, NL-5656 AA Eindhoven (NL); Venis, Wouter, NL-5656 AA Eindhoven (NL)
(74) Representative: Steenbeek, Leonardus Johannes

(57) **Abstract**

In a television signal receiver, comprising an intermediate frequency (IF) filter (3) having an intermediate frequency filter group delay, and an intermediate frequency (IF) demodulator (5) coupled to the intermediate frequency filter (3), a correction filter arrangement (9, 13, 15) is coupled to the intermediate frequency demodulator (5) and has a programmable group delay for cancelling a group delay precorrection carried out at a transmitter and the intermediate frequency filter group delay.

## Description

The invention relates to a television signal receiver comprising an intermediate frequency (IF) filter having an intermediate frequency filter group delay, and an intermediate frequency demodulator coupled to said intermediate frequency filter. The invention also relates to a method of receiving television signals. The invention can be used in both wide aspect ratio and standard aspect ratio television receivers.

Within the transmission of B,G/PAL, a precorrection of group delay is performed at the transmitter. The necessity of this group delay precorrection dates from the time when it was difficult and expensive to make receiver IF-filters with a flat group delay response characteristic. Nowadays, receiver IF-filters with a flat group delay response are available on the market at relatively low prices. Consequently, there is no longer any need for group delay precorrection.

There is a strong drive, coming from German broadcasters, to cancel the group delay precorrection process. They want to do this in two steps, *viz*. by halving the amount of group delay precorrection by 1994, and by cancelling the group delay precorrection entirely by 2001. However, cancelling the transmitter group delay precorrection causes a noticeable loss of sharpness and a chrominance/luminance delay difference in television receivers which still expect the television signal to have undergone the transmitter-sided precorrection.

It is, *inter alia*, an object of the invention to provide a television receiver which can cope with the gradual cancelling of the group delay precorrection. For this purpose, one aspect of the invention provides a television signal receiver as defined in claim 1. Another aspect of the invention provides a method of receiving television signals as defined in claim 5. Advantageous embodiments are defined in the subclaims.

The invention is based on the following considerations. Currently, we have a priori knowledge about the way in which the group delay precorrection characteristic will change in the nearby future. The television receiver has to adapt to this coming situation. The idea that is proposed here is the following. Install an arbitrary IF-filter with an a priori known group delay characteristic in the television signal receiver. After this filter a new all-pass filter is incorporated with a tunable or programmable group delay response. This programming or tuning is understood to mean for example, loading a digital filter with a new set of filter coefficients. The purpose of all this is to install an (approximate) inverse characteristic of the summed group delay responses of the group delay precorrection curve and the group delay response of the receiver IF-filter. Three different inverse curves have to be installed:
. the inverse curve of the summed standard group delay precorrection curve and the IF-filter's group delay,
. the inverse curve of the halved precorrection curve and the IF-filter's group delay, and
. the inverse curve of the receiver IF-filter's group delay. If an IF-filter with overall flat group delay is installed, post-filtering will not be necessary.

The second step is to find a way of letting the television signal receiver know which group delay precorrection characteristic is used at the transmitter. This could be signalled to the receiver by, for example:
. The wide screen signalling bits (see European patent application 92.200.407.2 filed on 13.02.92, attorney's docket PHN 13,988). There are many data bits in this (draft) proposal that are not allocated yet.
. dealer remote control.
Obviously, solution 1 is preferred because an automatic correction can be achieved thereby.

These and other aspects of the invention will be apparent from and elucidated with reference to the embodiments described hereinafter.

In the drawings:
Fig. 1 shows inverse group delay precorrection curves; and
Fig. 2 shows an embodiment of a television receiver in accordance with the present invention.

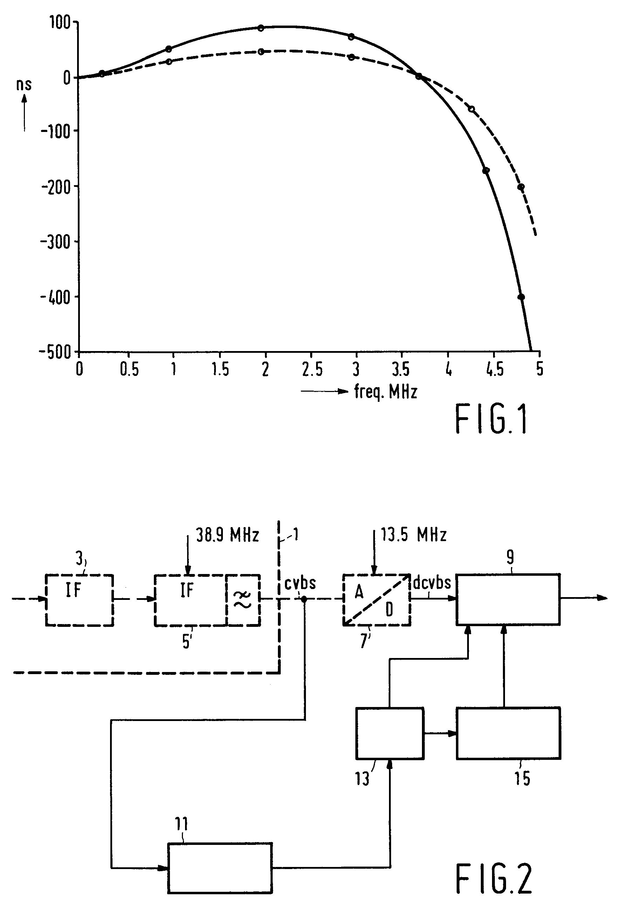

Fig. 1 shows inverse group delay precorrection curves for both standard group delay precorrection (solid line) and halved group delay precorrection (broken line). The horizontal axis shows the frequency in MHz. The vertical axis shows the group delay in nanoseconds (ns).

In Fig. 2, an implementation is sketched of an automatic group delay precorrection canceller in accordance with the present invention. This canceller is installed after a front-end section 1 and operates on composite baseband video CVBS. The front-end section 1 comprises an intermediate frequency (IF) filter 3 preceding an IF-demodulator 5. An A/D converter 7 is connected to the output of the front-end section 1 and produces a 13.5 MHz sampled composite baseband video signal DCVBS with an at least 8-bit representation of the sample values. The samples are fed to the input of a digital filter 9. The filter coefficients of this digital filter 9 are determined by (at least) 2 bits information of wide screen signalling bits encoded with the extended television signal. For more details about these signalling bits, reference is made to European patent application 92.200.407.2 filed on 13.02.92 (PHN 13,988). The signalling bits are decoded from the CVBS signal by a signalling bits decoder 11 which supplies the signalling bits to a filter selector 13. The filter selector 13 controls a memory 15 in which three sets of filter coefficients are stored. Whenever a change of information occurs in the relevant signalling bits, the filter selector 13 signals to the digital filter 9 that a new set of filter coefficients has to be loaded from the memory 15. This new set of filter coefficients corresponds to the inverse curve of the summed group delay characteristics of the IF-filter 3 installed in the receiver and the precorrection characteristic that is signalled by the transmitter to the receiver. Now, at the output of the digital filter 9, a digital version of composite baseband video with a flat group delay curve can be taken off for further distribution. If no signalling information is present, a default filter state is presumed to be present.

It should be noted that the above-mentioned embodiments illustrate rather than limit the invention, and that those skilled in the art will be able to design many alternative embodiments without departing from the scope of the appended claims. For example, it is possible to use the correction filter arrangement of the present invention to correct any group delay errors in the television signal receiver circuitry like a surface acoustic wave filter and a suppress sound carriers in the video signal path. The correction can be carried out very simply by a receiver manufacturer by measuring any group delay error and programming the correction filter arrangement such that the group delay error is compensated for.

## Claims

1. A television signal receiver, comprising
an intermediate frequency (IF) filter (3) having an intermediate frequency filter group delay;
an intermediate frequency (IF) demodulator (5) coupled to said intermediate frequency filter; and
a correction filter arrangement (9, 13, 15) coupled to said intermediate frequency demodulator (5) and having a programmable group delay for cancelling a group delay precorrection carried out at a transmitter and said intermediate frequency filter group delay.

2. A television signal receiver as claimed in claim 1, further comprising a signalling bits decoder (11) coupled to said intermediate frequency demodulator (3) for furnishing a control signal for said correction filter arrangement (9, 13, 15).

3. A television signal receiver as claimed in claim 1, wherein said correction filter arrangement comprises:
filter means (9) coupled to said intermediate frequency demodulator (5) and having said programmable group delay;
memory means (15) for storing a plurality of filter coefficient sets for said filter means (9); and
filter selection means (13) coupled to receive a control signal for said memory means (15).

4. A television signal receiver as claimed in claim 1, wherein said correction filter arrangement (9, 13, 15) has programmed to compensate for any television signal receiver circuitry group delay errors.

5. A method of receiving television signals, comprising the steps of:
intermediate frequency (IF) filtering said television signals with an intermediate frequency filtering group delay to obtain IF filtered signals;
intermediate frequency demodulating said IF filtered signals to obtain IF demodulated signals; and
correction filtering said IF demodulated signals with a programmable group delay for cancelling a transmitter group delay precorrection and said intermediate frequency filtering group delay.
